# EUROPÄISCHE PATENTANMELDUNG

(11) **EP 3 075 803 A1**
(43) Veröffentlichungstag der Anmeldung: **05.10.2016**
(21) Anmeldenummer: 15161918.6
(22) Anmeldetag: 31.03.2015
(51) Int. Cl.: C09J 7/02, G09F 3/10, C08J 5/18, C08L 33/12

(54) **ABZUGSSICHERE SICHERHEITSFOLIE MIT HOHER TRANSPARENZ UND OHNE SOLLBRUCHSTELLEN**

(71) Anmelder: Evonik Röhm GmbH, 64293 Darmstadt (DE)
(72) Erfinder: SEYOUM, Ghirmay, 63329 Egelsbach (DE); RODRIGUES, Haroldo, 60314 Frankfurt (DE); DICKHAUT, Günther, 68305 Mannheim (DE); PACHMANN, Jürgen, 68642 Bürstadt (DE); BIRTH, Detlef, 64807 Dieburg (DE)

(57) **Zusammenfassung**

Die vorliegende Erfindung betrifft abzugssichere Sicherheitsfolien aus einem Poly(meth)acrylat, insbesondere aus einem Polymethylmethacrylat, welches maximal 10 Gew% oder keine Schlagzähmodifizierer enthält. Diese Folien liegen in hoher Transparenz vor, können gut bedruckt werden und ohne Sollbruchstellen und appliziert werden. Die abzugssicheren Sicherheitsfolien können somit insbesondere in Dokumenten, wie zum Beispiel Reisepässen, in Sicherheitsetiketten, wie zum Beispiel Vignetten oder zur Diebstalsicherung von Produkten, oder als Preisschilder Verwendung finden. Diese Sicherheitsetiketten zeichnen sich zudem durch eine gute Witterungsbeständigkeit und insbesondere durch eine besonders gute UV-Stabilität aus.

Insbesondere betrifft die vorliegende Erfindung die Verwendung dieser Sicherheitsetiketten, die eine Dicke von höchstens 2 mm aufweisen, mindestens 80 Gew% Polymethylmethacrylat und keine Schlagzähmodifizierungspartikel enthalten.

## Beschreibung

### Gebiet der Erfindung

Die vorliegende Erfindung betrifft abzugssichere Sicherheitsfolien aus einem Poly(meth)acrylat, insbesondere aus einem Polymethylmethacrylat, welches maximal 10 Gew% oder keine Schlagzähmodifizierer enthält. Diese Folien können in hoher Transparenz, als transluzente Folie oder sogar als Weißfolie vorliegen, können gut bedruckt werden und ohne Sollbruchstellen appliziert werden. Die abzugssicheren Sicherheitsfolien können somit insbesondere in Dokumenten, wie zum Beispiel Chipkarten oder Reisepässen, in Sicherheitsetiketten, wie zum Beispiel Vignetten oder zur Diebstalsicherung von Produkten, oder als Preisschilder Verwendung finden. Diese Sicherheitsetiketten zeichnen sich zudem durch eine gute Witterungsbeständigkeit und insbesondere durch eine besonders gute UV-Stabilität aus.

Insbesondere betrifft die vorliegende Erfindung die Verwendung dieser Sicherheitsetiketten, die eine Dicke von höchstens 2 mm aufweisen, mindestens 80 Gew% Polymethylmethacrylat und maximal 10Gew% Schlagzähmodifizierungspartikel oder keine Schlagzähmodifizierungspartikel enthalten.

### Stand der Technik

Sicherheitsetiketten, die nicht zerstörungsfrei abziehbar sind, werden in diversen Anwendungsgebieten eingesetzt. Zu diesen Anwendungsgebieten gehören die Sicherung von Dokumenten, wie zum Beispiel von Chipkarten oder Reisepässen, Sicherheitsetiketten, wie zum Beispiel Vignetten, Etiketten zur Diebstalsicherung von Produkten oder Preisschilder. Eine typische Chipkarte nach Stand der Technik besteht zum Beispiel aus bis zu 12 Einzelteilen, die in bis zu 30 Arbeitsschritten zusammengefügt und programmiert werden. Dabei werden neben der Trägerschicht und der Schicht, die den Magnetstreifen aufweist für jede Funktion gesonderte Lagen aufgetragen. So werden eine oder mehrere Schichten allein benötigt, um einen ausreichenden Witterungsschutz, Schutz gegen Verkratzen und UV-Schutz zu realisieren. In einer weiteren Schicht wird zum Erhalt der Fälschungssicherheit eine nicht zerstörungsfrei entfernbare Sicherheitsschicht aufgebracht. Oft ist auch der Druck auf einer gesonderten Schicht zu finden, da die anderen aufgeführten Schichten nur schlecht oder mit einem nur mangelhaften Druckbild bedruckbar sind.

Nach Stand der Technik enthalten Etiketten, wie sie zum Beispiel als Vignetten zum Verkleben auf Glasscheiben aufgebracht werden, in der Regel eine optional bedruckbare Trägerschicht aus PET, PVC, PE oder BOPP. Auf diese Schicht ist auf der einen Oberseite eine zweite Schicht, die unter anderem zur Witterungsstabilisierung benötigt wird, mittels eines zwischenliegenden Haftklebstoffs auflaminiert. Diese zweite Schicht besteht nach Stand der Technik in der Regel aus Polycarbonat, PET oder PVC. Da solche Schichten allein zur besseren Verarbeitbarkeit über eine limitierte Sprödigkeit verfügen dürfen, müssen die Etiketten zusätzlich, z.B. mittels Schnitten, strukturiert werden, um eine zerstörungsfreie Entfernbarkeit zu unterbinden.
Weiterhin gibt es auch reine PVC-Folien, insbesondere als Weißfolien. Diese haben zwar eine gewünscht geringe Einreißfestigkeit. Es kann jedoch festgestellt werden, dass nach dem Einreißen der Weg zum Komplettbruch relativ lang ist. Das bedeutet, dass eine zum Beispiel beim Anheben des Sicherheitsetiketts minimal eingerissene Folie unter Umständen doch sehr vorsichtig vom Substrat gelöst werden kann. Wünschenswerter wäre hier ein schneller eintretender Komplettbruch.

### Aufgabe

In Anbetracht des Standes der Technik war es nun Aufgabe der vorliegenden Erfindung, ein Verfahren zur Herstellung von abzugssicheren Sicherheitsfolien, die ohne Strukturierung mit hoher Transparenz bzw. sehr gutem Druckbild realisierbar sind, zur Verfügung zu stellen.

Insbesondere war es in Hinblick auf den Stand der Technik Aufgabe hier, eine Folie für Sicherheitsetiketten zur Verfügung zu stellen, die sowohl über eine geringe Einreißfestigkeit, als auch über einen nur kurzen Weg des Risses zum Komplettbruch der Folie verfügt.

Weiterhin war es dabei insbesondere Aufgabe der vorliegenden Erfindung solche Sicherheitsfolien zur Verfügung zu stellen, die ohne zu reißen, hergestellt und verarbeitet werden können.

Eine weitere Aufgabe der Erfindung bestand darin, dass die Sicherheitsfolien auch bei längerem Gebrauch oder nach Bewitterung besonders gute Gelbwerte und eine insgesamt sehr hohe Witterungs- und UV-Beständigkeit aufweisen.

Weiterhin war es Aufgabe der vorliegenden Erfindung, Sicherheitsfolien, die bei der Herstellung von Chipkarten dazu beitragen, den Herstellungsprozess zu vereinfachen.

Weitere Aufgaben, die dieser Erfindung zugrunde liegen, können sich aus der Beschreibung, dem Stand der Technik sowie den Beispielen ergeben, ohne an dieser Stelle explizit genannt zu werden.

### Lösung

Gelöst werden die der Erfindung zugrunde liegenden Aufgaben durch die neuartige Verwendung von Polymethacrylatfolien als Sicherheitsetiketten. Diese Polymethacrylatfolien sind dabei dadurch gekennzeichnet, dass die Folie eine Dicke zwischen 15 und 120 µm und eine Bruchdehnung zwischen 2,0% und 15%, bevorzugt zwischen 4% und 14% aufweist.

Die Bruchdehnung wird erfindungsgemäß gemäß ISO 525 bestimmt, kann aber auch nach ASTM D1004 ermittelt werden.

In der Regel haben handelsübliche PMMA-Folien, wie sie beispielsweise als Witterungsschutzfolien verwendet werden, eine Bruchdehnung zwischen 50% und 100%. Für den Fachmann ist es überraschend, dass Folien mit einer deutlich geringeren Bruchdehnung als Sicherheitsetiketten ohne besondere Perforierung verwendet werden können. Die Bruchdehnung kann der Fachmann mit wenig Aufwand im erfindungsgemäßen Bereich einstellen. Dazu gibt es verschiedene Einflussfaktoren, durch deren Variation er die Bruchdehnung in die gewünschte Richtung beeinflussen kann. So sinkt die Bruchdehnung zum einen durch die Erhöhung der Glasübergangstemperatur, welche er durch die genaue Monomerzusammensetzung beeinflussen kann. Insbesondere ein geringer Anteil oder das Fehlen von Acrylaten oder Methacrylaten mit längeren Alkylresten von mehr als einem Kohlenstoffatom erhöhen die Glasübergangstemperatur.

Ein zweiter Einflussfaktor stellt die Art und insbesondere die Menge von Schlagzähmodifikatoren dar. Insbesondere eine steigende Konzentration der Schlagzähmodifikatoren erhöht auch die Bruchdehnung, so dass eher geringe Mengen oder der gänzliche Verzicht auf Schlagzähmodifikatoren zu einer erfindungsgemäßen Bruchdehnung beiträgt.

Im Falle von eingefärbten, insbesondere weißen Folien stellen die Pigmente den dritten Einflussfaktor dar. Bevorzugt werden die Folien neben transparenten Ausführungsformen weiß eingefärbt verwendet. Dazu wird beispielsweise Titandioxid in Konzentrationen von bis zu 40 Gew% dem Matrixmaterial der Folie zugemischt. Umso höher die Konzentration an Titandioxid ist, umso geringer ist die Bruchdehnung, so dass dem Fachmann für weiße Folien ein zusätzlicher Einflussfaktor zur Verfügung steht.

Dabei sind diese Polymethacrylatfolien bevorzugt dadurch gekennzeichnet, dass die Folie zu 55 bis 100 Gew%, bevorzugt aus 70 bis 100 Gew% aus einem Polymethacrylat besteht, welches wiederum zu 80 bis 100 Gew%, aus MMA und zu 0 bis 20 Gew% aus Styrol und/oder anderen (Meth)acrylaten mit einem Alkylrest, aufweisend 1 bis 4 Kohlenstoffatomen, besteht. Bevorzugt setzt sich das Poly(meth)acrylat aus 90 bis 100 Gew% MMA und aus 0 bis 10 Gew% aus Acrylaten mit einem Alkylrest, aufweisend 1 bis 4 Kohlenstoffatomen, zusammen.

Dabei weist die Folie eine Dicke zwischen 15 und 120 µm, bevorzugt zwischen 20 und 75 µm auf. Insbesondere zeichnet sich die Folie - insbesondere im Gegensatz zum Stand der Technik - dadurch aus, dass die Folie keine oder maximal 10 Gew%, bevorzugt maximal 2 Gew% Schlagzähmodifizierungsmittel enthält. Unter Schlagzähmodifikatoren werden erfindungsgemäß Partikel verstanden, die eine Weichphase aufweisen, mittels derer die Schlagzähigkeit von Folien oder Formmassen verbessert wird. In der Regel handelt es sich bei diesen um Gummipartikel oder um Poly(meth)acrylat-Emulsionspolymerisate. Diese Emulsionspolymerisate liegen dabei in der Regel als Kern-Schale- oder als Kern-Schale-Schale-Partikel vor, wobei der Kern oder die mittlere Schale eine Weichphase, zumeist mit einem hohen Anteil an Acrylaten, darstellt.
Die Ausführungsform einer transparenten Folie besteht bevorzugt aus 90 bis 100 Gew% aus dem Polymethacrylat. Die Ausführungsform einer weißen Sicherheitsfolie besteht bevorzugt aus 55 bis 95 Gew% Polymethacrylat und enthält bevorzugt zwischen 5 und 40 Gew%, besonders bevorzugt zwischen 20 und 35 Gew% Titandioxid.

### Detaillierte Ausgestaltung einer bevorzugt verwendeten Anlage zur Herstellung der erfindungsgemäß verwendeten Polymethacrylatfolien

Bevorzugt wird die erfindungsgemäß verwendete Polymethacrylatfolie mittels eines Extrusionsverfahren hergestellt. Dazu wird insbesondere eine Anlage verwendet, die mindestens folgende Komponenten aufweist:
ein Extruder,
eine Schmelzepumpe,
eine optionale Schmelzefiltration,
ein optionales statisches Mischelement,
   eine Flachfoliendüse,
   ein Glättwerk oder eine Chill-Roll-Walze
   und einen Wickler.

Die erfindungsgemäß verwendeten Polymethacrylatfolien haben darüber hinaus eine besonders hohe Beständigkeit gegen Witterungseinflüsse, insbesondere gegen UV-Bestrahlung. Um diese zusätzlich zu steigern, können dem Polymethacrylat UV-Absorber und/oder UV- Stabilisatoren zugesetzt sein.

Auch lassen sich die erfindungsgemäß verwendeten Polymethacrylatfolien besonders einfach und kostengünstig herstellen. Dies gilt insbesondere für das aufgezeigte, bevorzugte Verfahren zu deren Herstellung. Auch bei der Extrusion der Polymethacrylatfolien ist die Sprödigkeit trotz fehlender Schlagzähmodifikatoren so gering, dass das Risiko eines Bahnabrisses weiter minimiert ist und die Folie bei hohen Extrusionsgeschwindigkeit herzustellen ist. Die Polymethacrylatfolie lässt sich somit mit vorhandenen Extrusionsanlagen und nach bekannten Methoden, bevorzugt nach weiter oben dargestellter Ausgestaltung der Extrusionsanlage, herstellen.

Weiterhin haben die erfindungsgemäß verwendeten Polymethacrylatfolien den Vorteil, dass sie sich leicht auf gewünschte Formate zuschneiden oder stanzen lassen. Besonders geeignete Methoden zum Zuschneiden der Polymethacrylatfolie sind das Laserschneiden oder das Laserstanzen.

Das Extrudieren von Polymeren zu Folien ist weithin bekannt und beispielsweise in Kunststoffextrusionstechnik II, Hanser Verlag, 1986, S. 125 ff. beschrieben. Hier sind auch weitere Ausführungsformen der einzelnen Anlagenkomponenten ausgeführt.

Beim erfindungsgemäßen Verfahren wird eine heiße Schmelze aus der Düse des Extruders auf einen Spalt zwischen zwei Glättwalzen oder auf eine Chill-Roll-Walze extrudiert. Die optimale Temperatur der Schmelze ist beispielsweise von der Zusammensetzung der Mischung abhängig und kann daher in weiten Bereichen schwanken. Bevorzugte Temperaturen der PMMA-Formmasse bis zum Düseneintritt liegen im Bereich von 150 bis 300 °C, besonders bevorzugt im Bereich von 180 bis 270 °C und ganz besonders bevorzugt im Bereich von 200 bis 260 °C. Die Temperatur der Glättwalzen ist vorzugsweise kleiner oder gleich 150 °C, bevorzugt zwischen 60 °C und 140 °C.

In einer Ausführungsform wird die Temperatur der Düse vorzugsweise höher als die Temperatur der Mischung vor dem Düseneintritt gewählt. Bevorzugt wird die Düsentemperatur um 10 °C, besonders bevorzugt um 20 °C und ganz besonders bevorzugt um 30 °C höher eingestellt als die Temperatur der Mischung vor dem Düseneintritt. Dementsprechend liegen bevorzugte Temperaturen der Düse im Bereich von 160 °C bis 330 °C, besonders bevorzugt 190 °C bis 300 °C.

Das verwendete Glättwerk besteht beispielsweise aus zwei oder drei Glättwalzen. Glättwalzen sind in der Fachwelt weithin bekannt, wobei zum Erhalt eines hohen Glanzes polierte Walzen verwendet werden. In dem erfindungsgemäßen Verfahren können aber auch andere Walzen als Glättwalze verwendet werden. Dabei kann es sich beispielsweise um Mattwalzen handeln. Durch den Spalt zwischen den beiden ersten Glättwalzen wird ein Film gebildet, der durch die gleichzeitige Abkühlung zu einer Folie wird. In Fig. 1 ist eine Ausführungsform mit drei Glättwalzen schematisch abgebildet.
Die alternativ verwendeten Chill-Roll-Walzen sind dem Fachmann gleichsam bekannt. Hier wird der Schmelzefilm auf eine einzelne, gekühlte Walze abgelegt und von dieser weitertransportiert. Aufgrund der einfacheren Installation und Betrieb sind Chill-Roll-Walzen gegenüber Glättwerken zur Herstellung der erfindungsgemäßen Polymethacrylatfolien bevorzugt.
Eine besonders gute Oberflächenqualität der Polymethacrylatfolien können dadurch gewährleistet werden, dass Düse und Walze Chromoberflächen aufweisen, und ganz besonders dadurch, dass diese Chromoberflächen eine Rauhigkeit Ra (gemäß DIN 4768) kleiner 0,10 µm, bevorzugt kleiner 0,08 µm aufweisen.

Damit die entstehende Folie weitgehend frei von Verunreinigungen ist, wird vor dem Eintritt der Schmelze in die Düse optional ein Filter angeordnet. Die Maschenweite des Filters richtet sich im Allgemeinen nach den eingesetzten Ausgangsstoffen und kann dementsprechend in weiten Bereichen variieren. Im Allgemeinen liegen sie im Bereich von 300 µm bis 20 µm. Es können auch Filter mit mehreren Sieben unterschiedlicher Maschenweite vor dem Düseneintritt angeordnet werden. Diese Filter sind kommerziell erhältlich. Um Folien mit hoher Güte zu erhalten, ist es des Weiteren vorteilhaft besonders reine Rohstoffe einzusetzen.

Optional kann darüber hinaus vor der Flachfoliendüse ein statisches Mischelement eingebaut sein. Über dieses können Komponenten wie Pigmente, Stabilisatoren oder Additive in die Polymerschmelze gemischt werden oder es können bis zu 5 Gew% eines zweiten Polymers, zum Beispiel in Form einer Schmelze aus einem zweiten Extruder zu dem PMMA gemischt werden.

Der Druck mit dem die geschmolzene Mischung in die Düse gepresst wird, kann beispielsweise über die Geschwindigkeit der Schnecke gesteuert werden. Der Druck liegt im Allgemeinen in einem Bereich von 40 bis 150 bar, ohne dass das erfindungsgemäße Verfahren hierdurch beschränkt wird. Die Geschwindigkeit, mit der die Folien erfindungsgemäß erhalten werden können, ist dementsprechend im Allgemeinen größer als 5 m/min, insbesondere größer als 10 m/min.

Zur Sicherstellung einer gleichmäßigen Schmelzeförderung kann zusätzlich eine Schmelzepumpe vor der Flächenfoliendüse eingebaut sein.

### Erfindungsgemäß verwendete Matrixmaterialien

Zur Herstellung der erfindungsgemäß verwendeten Polymethacrylatfolien werden Formmassen, deren thermoplastischer Hauptbestandteil zu mindestens 80 Gew%, vorzugsweise mindestens 90 Gew% und besonders bevorzugt mindestens 95 Gew% aus Polymethylmethacrylat (im Weiteren kurz PMMA) bestehen, eingesetzt. Diese Polymere werden im Allgemeinen durch radikalische Polymerisation von Mischungen erhalten, die Methylmethacrylat enthalten. Im Allgemeinen enthalten diese Mischungen mindestens 80 Gew%, vorzugsweise mindestens 90 Gew% und besonders bevorzugt mindestens 95 Gew%, bezogen auf das Gewicht der Monomere, Methylmethacrylat. Eine besonders hohe Qualität zeigen insbesondere Sicherheitsetiketten, die im Wesentlichen aus Polymethylmethacrylat bestehen.

Daneben können diese Mischungen weitere (Meth)acrylate enthalten, die mit Methylmethacrylat copolymerisierbar sind. Der Ausdruck (Meth)acrylate umfasst Methacrylate und Acrylate sowie Mischungen aus beiden.

Neben den zuvor dargelegten (Meth)acrylaten können die zu polymerisierenden Zusammensetzungen auch weitere ungesättigte Monomere aufweisen, die mit Methylmethacrylat und den zuvor genannten (Meth)acrylaten copolymerisierbar sind. Hierzu gehören unter anderem 1-Alkene, Acrylnitril, Vinylacetat, Styrol, substituierte Styrole oder Vinylether. Alle dargelegten Monomere werden bevorzugt in einer hohen Reinheit eingesetzt.

Das Gewichtsmittel des Molekulargewichts M_{w} der Homo- und/oder Copolymere kann in weiten Bereichen schwanken, wobei das Molekulargewicht üblicherweise auf den Anwendungszweck und die Verarbeitungsweise der Formmasse abgestimmt wird. Im Allgemeinen liegt es aber im Bereich zwischen 20 000 und 1 000 000 g/mol, vorzugsweise 50 000 bis 500 000 g/mol und besonders bevorzugt 80 000 bis 300 000 g/mol, ohne dass hierdurch eine Einschränkung erfolgen soll. Das Gewichtsmittel des Molekulargewichts wird mittel Gelpermeationschromatographie (GPC) gegen Polystyrolstandards bestimmt.

Zur Herstellung des erfindungsgemäß verwendeten Polymethacrylatfolien können verschiedene Poly(meth)acrylate als Matrixmaterial eingesetzt werden, die sich beispielsweise im Molekulargewicht oder in der Monomerzusammensetzung unterscheiden. Derartig besonders bevorzugte Formmassen sind unter dem Handelsnamen PLEXIGLAS^{®} von der Fa. Evonik Industries GmbH kommerziell erhältlich.

Die Formmassen können übliche Zusatzstoffe enthalten. Hierzu gehören unter anderem Antistatika, Antioxidantien, Lichtstabilisatoren und organische Phosphorverbindungen, Verwitterungsschutzmittel und Weichmacher. Die Menge an Zusatzstoffen ist jedoch auf den Anwendungszweck beschränkt. Vorzugsweise umfassen die erfindungsgemäßen Sicherheitsfolien höchstens 10 Gew% und besonders bevorzugt höchstens 2 Gew% Additive, wobei Sicherheitsfolien, die im Wesentlichen keine Additive umfassen überraschend eine außergewöhnliche Leistungsfähigkeit zeigen.

### Die Sicherheitsetiketten

Neben der beschriebenen Verwendung sind auch die applikationsfähigen Sicherheitsfolien selbst ein Teil der vorliegenden Erfindung. diese zeichnen sich dadurch aus, dass die Folie eine Dicke zwischen 15 und 120 µm und eine Bruchdehnung zwischen 2,0% und 15%, bevorzugt zwischen 4% und 14% aufweist, und dass die Sicherheitsfolie vor der Applikation mindestens folgende Schichten in angegebener Reihenfolge aufweist:
a) eine Polymethacrylatfolie, die zu 55 bis 100 Gew% aus einem Polymethacrylat besteht, welches zu 80 bis 100 Gew% aus MMA und zu 0 bis 20 Gew% aus Styrol oder anderen (Meth)acrylaten mit einem Alkylrest, aufweisend 1 bis 4 Kohlenstoffatomen, besteht, die zusätzlich dadurch gekennzeichnet ist, dass die Folie maximal 10 Gew% Schlagzähmodifizierer enthält, und dass sie auf mindestens einer Seite eine Bedruckung aufweist,
b) einen Haftklebstoff,
c) eine Trennbeschichtung und
d) eine Trägerschicht.

Bevorzugt weist die Schicht a) eine Dicke ohne Bedruckung zwischen 20 und 100 µm, bevorzugt zwischen 30 und 75 µm auf. Die Bedruckung wiederum hat in der Regel eine Dicke zwischen 1,5 und 3 µm, während die Schicht b) eine Dicke zwischen 20 und 30 µm, die Schicht c) eine Dicke zwischen 0,5 und 1,2 µm und die Schicht d) eine Dicke zwischen 20 und 70 µm aufweisen.

Die angegebenen Dicken beziehen sich hierbei auf den Mittelwert der kleinsten Ausdehnung der jeweiligen Schicht senkrecht zur Applikationsfläche gemessen. Die Dicke an sich ergibt sich in der Regel aus der jeweiligen Applikationstechnologie der einzelnen Schichten. So kann die Bedruckung beispielsweise mittels Flexodruck, Digitaldruck oder sogar Siebdruck erfolgen, während der Haftklebstoff mittels einer Walze oder einem Rakel aufgetragen werden können. Für Schichten, die vor der Herstellung der Sicherheitsfolie getrennt vorliegen, wie insbesondere die Schichten a) und d), kann die Dicke der Schicht mittels eines Bügelmikrometers oder ähnlichen bekannten Vorrichtungen bestimmt werden.

Die Ausführungsform einer transparenten Folie besteht bevorzugt aus 90 bis 100 Gew% aus dem Polymethacrylat. Die Ausführungsform einer weißen Sicherheitsfolie besteht bevorzugt aus 55 bis 95 Gew% Polymethacrylat und enthält bevorzugt zwischen 5 und 40 Gew%, besonders bevorzugt zwischen 20 und 35 Gew% Titandioxid.

Die Ausdehnungen der Sicherheitsetiketten in die anderen beiden Dimensionen sind grundsätzlich frei wählbar und in der Breite durch das zur Herstellung eingesetzte Glättwerk bzw. die Extrusionsdüse limitiert. Dies bedeutet, dass die Formate nahezu frei wählbar sind.

Der Zuschnitt der Polymethacrylatfolie erfolgt bevorzugt mittels Stanzen, Schneiden, Laserschneiden oder Laserstanzen. Insbesondere bevorzugt durch Laserschneiden oder -stanzen.

In einer besonderen Ausführungsform enthält die Sicherheitsfolie keine Schlagzähmodifizierer.

Optional, jedoch nicht notwendigerweise, können die erfindungsgemäß hergestellten Polymethacrylatfolien zusätzlich mit Rillen oder Einkerbungen versehen werden, um ein zerstörungsfreies Abziehen der Etiketten zusätzlich zu unterbinden. Dies ist jedoch eigentlich nicht nötig, da sich die erfindungsgemäß als abzugssichere Sicherheitsetiketten verwendeten Polymethacrylatfolien an sich nach dem Verkleben auf einer Oberfläche nicht mehr zerstörungsfrei entfernen lassen.

Bevorzugt finden die Sicherheitsfolien Verwendung zur Herstellung von Chipkarten, Dokumenten, Sicherheitsetiketten, anderen Etiketten oder Preisschildern. Ein anschauliches Beispiel zur Verwendung sind beispielsweise Mautplaketten, die auf der Innenseite der Fahrzeugscheibe angebracht werden.

### Beispiele

### Beispiel 1

Eine Formasse, zusammengesetzt aus 98 Gew% eines Polymethylmethacrylats und 2 Gew% Schlagzähmodifizierungsmittels, in Form eines Kern-Schale-Partikels, wird unter folgenden Bedingungen zu einer Foliendicke von 50 µm extrudiert:
Schneckentemperatur im Extruder: 240 bis 270°C
Düsentemperatur: 240 bis 260°C
Temperatur der Schmelze an der Düse: 240 bis 260°C
Walzentemperatur: 50 bis 120°C

Es wird an dem Material eine Bruchdehnung von 3% gemessen:

### Beispiel 2

Wie Beispiel 1, nur dass 5 Gew % Schlagzähmodifizierer eingesetzt wurden. Es wurde eine Bruchdehnung von 4,5% gemessen.

### Beispiel 3

### Zusammensetzung: 3

Wie Beispiel 1, nur dass 30 Gew % Schlagzähmodifizierer und 20 Gew% Titandioxid eingesetzt wurden. Es wurde eine Bruchdehnung von 8% gemessen.

## Patentansprüche

1. Verwendung von Polymethacrylatfolien als Sicherheitsetiketten, **dadurch gekennzeichnet, dass** die Folie eine Dicke zwischen 15 und 120 µm und eine Bruchdehnung zwischen 2,0% und 15% aufweist.

2. Verwendung von Polymethacrylatfolien gemäß Anspruch 1, **dadurch gekennzeichnet, dass** die Folie zu 55 bis 100 Gew% aus einem Polymethacrylat besteht, welches zu 80 bis 100 Gew% aus MMA und zu 0 bis 20 Gew% aus Styrol und/oder anderen (Meth)acrylaten mit einem Alkylrest, aufweisend 1 bis 4 Kohlenstoffatomen, besteht, und dass die Folie maximal 10 Gew% oder keine Schlagzähmodifizierer enthält.

3. Verwendung von Polymethacrylatfolien gemäß Anspruch 1 oder 2, **dadurch gekennzeichnet, dass** die Folie zu 90 bis 100 Gew% aus einem Polymethacrylat besteht, welches zu 90 bis 100 Gew% aus MMA und zu 0 bis 10 Gew% aus Acrylaten mit einem Alkylrest, aufweisend 1 bis 4 Kohlenstoffatomen, besteht, und dass die Folie eine Dicke zwischen 20 und 75 µm aufweist.

4. Verwendung von Polymethacrylatfolien gemäß mindestens einem der Ansprüche 1 bis 3, **dadurch gekennzeichnet, dass** die Folie weiß eingefärbt ist und dazu zwischen 5 und 40 Gew% Titandioxid enthält.

5. Verwendung von Polymethacrylatfolien gemäß mindestens einem der Ansprüche 1 bis 4, **dadurch gekennzeichnet, dass** die Polymethacrylatfolien mittels eines Verfahrens hergestellt werden, welches **dadurch gekennzeichnet, dass** es sich um ein Extrusionsverfahren handelt, und dass die verwendete Anlage mindestens aus folgenden Komponenten besteht:
ein Extruder,
eine Schmelzepumpe,
eine optionale Schmelzefiltration,
ein optionales statisches Mischelement,
eine Flachfoliendüse,
ein Glättwerk oder Chill-Roll-Walze,
und einen Wickler,
wobei die Flachfoliendüse über eine Düsenlippe mit Stellelementen zur Einstellung der Düsenlippenbreite verfügt, und die Stellelemente einen Abstand von 11 bis 15 mm zueinander aufweisen,
der Düsenkörper eine Außengeometrie aufweist, die, der Form der Glättwalzen angepasst ist,
und der Abstand von der Schmelzeaustrittskante zum Glättspalt 80 mm oder kleiner ist.

6. Verwendung von Polymethacrylatfolien gemäß Anspruch 5, **dadurch gekennzeichnet, dass** die Flachfoliendüse gegenüber dem Glättwerk mittels Laser ausgerichtet wird und dass die parallele Abweichung der Düse zu den Glättwalzen, gemessen an den beiden Enden einer Düsenaußenseite eine maximale Abweichung von 3 mm aufweist.

7. Verwendung von Polymethacrylatfolien gemäß mindestens einem der Ansprüche 1 bis 6, **dadurch gekennzeichnet, dass** die Differenz zwischen der dünnsten und der dicksten Stelle der Polymethacrylatfolie maximal 5 µm beträgt.

8. Verwendung von Polymethacrylatfolien gemäß mindestens einem der Ansprüche 5 bis 7, **dadurch gekennzeichnet, dass** Düse und Walze Chromoberflächen aufweisen, und dass diese Chromoberflächen eine Rauhigkeit Ra kleiner 0,08 µm aufweisen.

9. Applikationsfähige Sicherheitsfolie, **dadurch gekennzeichnet, dass** die Sicherheitsfolie eine Dicke zwischen 15 und 120 µm und eine Bruchdehnung zwischen 2,0% und 15% aufweist, und dass die Sicherheitsfolie vor der Applikation mindestens folgende Schichten in angegebener Reihenfolge aufweist:
a) eine Polymethacrylatfolie, die zu 55 bis 100 Gew% aus einem Polymethacrylat besteht, welches zu 80 bis 100 Gew% aus MMA und zu 0 bis 20 Gew% aus Styrol oder anderen (Meth)acrylaten mit einem Alkylrest, aufweisend 1 bis 4 Kohlenstoffatomen, besteht, die zusätzlich **dadurch gekennzeichnet ist, dass** die Folie maximal 10 Gew% Schlagzähmodifizierer enthält, und dass sie auf mindestens einer Seite eine Bedruckung aufweist,
b) einen Haftklebstoff,
c) eine Trennbeschichtung und
d) eine Trägerschicht.

10. Applikationsfähige Sicherheitsfolie gemäß Anspruch 9, **dadurch gekennzeichnet, dass** Schicht a) eine Dicke ohne Bedruckung zwischen 20 und 75 µm, die Bedruckung eine Dicke zwischen 1,5 und 3 µm, die Schicht b) eine Dicke zwischen 20 und 30 µm, die Schicht c) eine Dicke zwischen 0,5 und 1,2 µm und die Schicht d) eine Dicke zwischen 20 und 70 µm aufweist.

11. Applikationsfähige Sicherheitsfolie gemäß Anspruch 9 oder 10, **dadurch gekennzeichnet, dass** die Folie transparent ist und zu 90 bis 100 Gew% aus dem Polymethacrylat besteht.

12. Applikationsfähige Sicherheitsfolie gemäß Anspruch 9 oder 10, **dadurch gekennzeichnet, dass** die Folie weiß eingefärbt ist und dazu 55 bis 95 Gew% Polymethacrylat und 5 bis 40 Gew% Titandioxid enthält.

13. Applikationsfähige Sicherheitsfolie gemäß mindestens einem der Ansprüche 9 bis 12, **dadurch gekennzeichnet, dass** die Folie keine Schlagzähmodifizierer enthält.

14. Verwendung der Sicherheitsfolien gemäß Anspruch 9 oder 12 zur Herstellung von Chipkarten, Dokumenten, Sicherheitsetiketten, anderen Etiketten oder Preisschildern.
